# EUROPÄISCHE PATENTSCHRIFT

(11) **EP 3 688 348 B1**
(45) Veröffentlichungstag und Bekanntmachung des Hinweises auf die Patenterteilung: **28.04.2021**
(21) Anmeldenummer: 19711032.3
(22) Anmeldetag: 07.03.2019
(51) Int. Cl.: F16K 11/048, E03C 1/02

(54) **FERNBEDIENBARES SANITÄRES UMSCHALTVENTIL SOWIE ZUGEHÖRIGE SANITÄRE BAUGRUPPE**
SANITARY SWITCHOVER VALVE THAT CAN BE REMOTELY OPERATED AND ASSOCIATED SANITARY ASSEMBLY
SOUPAPE DE COMMUTATION SANITAIRE POUVANT ÊTRE COMMANDÉE À DISTANCE ET MODULE SANITAIRE ASSOCIÉ

(30) Priorität: 30.04.2018 DE 202018102400 U
(43) Veröffentlichungstag der Anmeldung: 05.08.2020
(73) Patentinhaber: Neoperl GmbH, 79379 Müllheim (DE)
(72) Erfinder: MEYER, Burkhard, 79312 Emmendingen (DE)
(74) Vertreter: Mertzlufft-Paufler, Cornelius
(86) Internationale Anmeldenummer: PCT/EP2019/055671
(87) Internationale Veröffentlichungsnummer: WO 2019/211028

(56) Entgegenhaltungen:
- EP-A1- 1 253 361
- DE-A1-102015 002 885
- US-A- 5 743 286
- US-A- 5 778 921
- US-A1- 2014 054 484

## Beschreibung

Die Erfindung betrifft ein sanitäres Umschaltventil, das insbesondere aus der Ferne bedient werden kann, sowie eine zugehörige sanitäre Baugruppe.

Das Umschaltventil weist ein Ventilgehäuse auf, das einen Ventileinlass, einen ersten Ventilauslass und einen zweiten Ventilauslass ausbildet, sowie einen Ventilkolben, der von einer ersten Umstellposition in eine zweite Umstellposition bewegbar ist. Ein durch den Ventileinlass einströmendes Fluid kann in der ersten Umstellposition entlang eines ersten Strömungsweges durch den ersten Ventilauslass geführt werden. In der zweiten Umstellposition kann das Fluid hingegen entlang eines zweiten Strömungsweges durch den zweiten Ventilauslass geführt werden. Durch Umschalten des Umschaltventils kann ein Fluid, also insbesondere eine Flüssigkeit, somit entweder entlang des ersten Strömungswegs oder entlang des zweiten Strömungswegs, vorzugsweise durch das Ventilgehäuse hindurch, geführt werden.

Derartige Umschaltventile sind im Stand der Technik vorbekannt, beispielsweise aus der DE 10 2015 002 885 A1. Jedoch hat sich bei der Benutzung derartiger Ventile herausgestellt, dass das Umschalten von der ersten Umstellposition in die zweite Umstellposition, insbesondere im Niederdruckbereich, unzuverlässig sein kann. Ein dabei typischerweise auftretendes Problem besteht darin, dass der Ventilkolben während des Umschaltens, insbesondere bei nur geringem anliegenden Fluiddruck, in Schwingungen oder Rotationen versetzt wird, wodurch das Umschaltverhalten negativ beeinflusst wird. Insbesondere kann es dabei zu einer unerwünschten Geräuschentwicklung kommen oder das Umschalten läuft nur unvollständig ab.

Aus den Veröffentlichungen EP 1 253 361 A1, US 2014 0054484 A1, US 5 778 921, sowie US 5 743 286 sind weitere Umschaltventile wie eingangs beschrieben bekannt, die jeweils einen zwischen zwei Umstellpositionen mittels Fluiddruck bewegbaren Ventilkolben aufweisen. Hierbei sind Ausgestaltungen bekannt, bei denen das Fluid an dem Ventilkolben vorbei strömt oder aber durch den Ventilkolben hindurch geführt ist (vgl. dazu EP 1 253 361 A1).

Schließlich offenbart DE 10 20156 002 885 A1 ein weiteres sanitäres Umschaltventil, bei welchem ein Fluid durch Kolbeneinlässe strömt, die in Seitenflächen (in Bezug auf die Bewegungsrichtung des Ventilkolbens) des Ventilkolbens ausgebildet sind.

Aufgabe der vorliegenden Erfindung ist es daher ein Umschaltventil wie eingangs beschrieben bereitzustellen, das diese bestehenden Nachteile überwindet und ein zuverlässiges. Umschaltverhalten, gerade bei niedrigen Fluiddrücken am Ventileinlass, gewährleistet.

Zur Lösung dieser Aufgabe sind erfindungsgemäß bei einem Umschaltventil die Merkmale von Anspruch 1 vorgesehen. Insbesondere wird somit erfindungsgemäß zur Lösung der Aufgabe bei einem Umschaltventil der eingangs beschriebenen Art vorgeschlagen, dass der Ventilkolben ein Verbindungselement aufweist, das einen ersten Endabschnitt des Ventilkolbens im Bereich des ersten Ventilauslasses mit einem zweiten Endabschnitt des Ventilkolbens im Bereich des zweiten Ventilauslasses verbindet, wobei ein, vorzugsweise maximaler, Außendurchmesser des Verbindungselements kleiner als ein, 20 beispielsweise maximaler, mittlerer oder minimaler, Außendurchmesser des zweiten Endabschnitts ist.

Gemäß der Erfindung überträgt das Verbindungselement Zugkräfte von dem ersten Endabschnitt auf den zweiten Endabschnitt des Ventilkolbens und umgekehrt. Damit können Kräfte, die durch einen Fluiddruck auf Flächen im Bereich der jeweiligen Endabschnitte des Ventilkolbens entstehen, zum Umschalten des Umschaltventils von der ersten in die zweite Position (und umgekehrt) genutzt werden.

Durch die spezifische Geometrie des Ventilkolbens gemäß der Erfindung kann dabei ein besonders sicheres Umschalten von der ersten Umstellposition in die zweite Umstellposition erreicht werden, da im Vergleich zu vorbekannten Umschaltventilen, eine sehr viel größere Fluidmenge beim Umschalten durch das Umschaltventil strömen kann. Aufgrund des damit einhergehenden größeren Momentums können größere Kräfte durch den Fluidfluss erzeugt werden, die für das Umschalten genutzt werden können. Hierbei fließt das durch den Ventileinlass in das Ventilgehäuse einströmende Fluid entlang des Verbindungselements, welches den Ventilkolben mit ausbildet, entweder in Richtung des ersten Ventilauslasses oder in Richtung des zweiten Ventilauslasses, je nachdem welcher der beiden Strömungswege gerade ausgewählt ist.

Erfindungsgemäß kann die Aufgabe auch durch weitere vorteilhafte Ausführungen gemäß den Unteransprüchen gelöst werden.

Gemäß einer spezifischen Ausgestaltung, kann der Ventilkolben insbesondere mittels eines am Ventileinlass anliegenden Fluiddrucks von der ersten Umstellposition in die zweite Umstellposition umschaltbar sein. Hierzu ist der Ventilkolben, vorzugsweise translativ verschieblich, innerhalb des Ventilgehäuses gelagert, beispielsweise mittels einer Lippendichtung (Vgl. unten).

Das Umschalten kann bevorzugt geschehen, sobald der zweite Strömungsweg, insbesondere in einem sich an den zweiten Ventilauslass anschließenden Abschnitt, freigegeben ist. Das Freigeben kann beispielsweise dadurch geschehen, dass ein, bezogen auf den zweiten Ventilauslass stromabwärts angeordnetes Auslassventil, welches insbesondere entfernt von dem Umschaltventil angeordnet sein kann, manuell von einem Benutzer geöffnet wird. Somit ist es möglich, das erfindungsgemäße Umschaltventil aus der Ferne, beispielsweise durch Betätigen eines wie soeben beschriebenen Auslassventils, umzuschalten.

Bevorzugt bildet der erste Endabschnitt des Ventilkolbens im Bereich des ersten Ventilauslasses eine Ventildichtung mit dem Ventilgehäuse aus. In diesem Fall kann das Ventilgehäuse hierzu eine ringförmige Dichtfläche ausbilden, wodurch eine besonders sichere Abdichtung erzielbar ist.

Vorzugsweise ist diese Ventildichtung in der ersten Umstellposition zumindest teilweise geöffnet. Dann kann in der ersten Umstellposition ein Fluid, dass durch den Ventileinlass einströmt an der Ventildichtung vorbei und aus dem ersten Ventilauslass strömen. Durch diese Strömung sind insbesondere Kräfte erzeugbar, die den Ventilkolben in der ersten Umstellposition halten bzw. in diese ziehen.

Unabhängig hiervon ist der erste Ventilauslass in der zweiten Umstellposition vorzugsweise vollständig verschlossen.

Der zweite Endabschnitt des Ventilkolbens kann hingegen einen Aufnahmeraum ausbilden, in den ein Funktionselement einsetzbar ist oder eingesetzt ist.

Bevorzugt beeinflusst, beispielsweise regelt, das Funktionselement einen Fluidfluss entlang des zweiten Strömungswegs. So kann das Funktionselement beispielsweise eine Durchflussdrossel, ein Durchflussmengenregler oder ein Rückschlagventil oder ein Rückflussverhinderer sein. Diese Elemente regeln den Fluidfluss durch das Funktionselement hindurch, in Abhängigkeit des am Funktionselement anliegenden Fluiddrucks.

Ganz besonders vorteilhaft für ein sicheres Umschalten des Umschaltventils ist es, wenn der Außendurchmesser des Verbindungselements zudem kleiner als ein Außendurchmesser des ersten Endabschnitts ist. Der Außendurchmesser des Verbindungselements kann hierbei zum Beispiel ein minimaler, mittlerer oder maximaler Außendurchmesser sein. Ferner kann der Außendurchmesser des ersten Endabschnitts hierbei beispielsweise ein minimaler, mittlerer oder maximaler Außendurchmesser sein.

Ergänzend oder alternativ kann auch vorgesehen sein, dass ein Innendurchmesser des Ventilgehäuses in Höhe des Ventileinlass mindestens 1,5mal, zweimal oder sogar dreimal so groß gewählt ist wie der Außendurchmesser des Verbindungselements.

Alle diese Varianten können dazu führen, dass der Fluidfluss beim Umschalten des Umschaltventils begünstigt wird; insbesondere kann eine größere Fluidmenge beim Umschalten genutzt werden und, wie noch genauer zu erläutern sein wird, es können besonders große Prallflächen an dem Ventilkolben ausgebildet werden, was für ein sicheres Umschalten vorteilhaft ist.

Das Verbindungselement kann hierbei beispielsweise stabförmig ausgebildet sein, insbesondere derart, dass das Verbindungselement einen möglichst geringen Strömungswiderstand bietet.

Das Verbindungselement kann alternativ oder zusätzlich als ein Kolbenschaft, vorzugsweise aus Vollmaterial ausgebildet sein. Zumindest bereichsweise kann das Verbindungselement alternativ oder zusätzlich rotationssymmetrisch ausgebildet sein. Daneben kann das Verbindungselement aber auch zum Beispiel in Form eines geradlinigen Rohrs ausgebildet sein. In allen diesen Fällen ist es für eine einfache Fertigung generell von Vorteil, wenn das Verbindungselement einstückig zusammen mit dem Ventilkolben ausgebildet ist. Das Verbindungselement kann alternativ oder in weiteren Bereichen einen unrunden, beispielsweise sternförmigen, vieleckigen oder ovalen, Querschnitt aufweisen.

Unabhängig hiervon ist es daneben für eine möglichst ruhige Fluidströmung innerhalb des Ventilgehäuses günstig, wenn das Verbindungselement zentrisch in Bezug auf das Ventilgehäuse und/oder beabstandet von einer Innenwandung des Ventilgehäuses angeordnet ist.

Um die für das Umschalten nutzbaren Kräfte zu maximieren, ist es vorteilhaft, Prallflächen an dem Ventilkolben auszubilden. Lastet ein Fluiddruck auf einer solchen Fläche, so überträgt dieser eine Kraft auf den Ventilkolben, der zum Umschalten des Ventils genutzt werden kann.

So kann beispielsweise gemäß einer spezifischen Ausgestaltung vorgesehen sein, dass der Ventilkolben in Höhe eines ersten Übergangsbereichs von dem Verbindungselement zu dem ersten Endabschnitt eine erste Prallfläche ausbildet. Ergänzend oder alternativ hierzu kann der Ventilkolben auch in Höhe eines zweiten Übergangsbereichs von dem Verbindungselement zu dem zweiten Endabschnitt eine zweite Prallfläche ausbilden.

Vorzugsweise gehen die beiden Prallflächen jeweils direkt in das Verbindungselement über. Daneben ist es vorteilhaft, wenn die beiden Prallflächen rotationssymmetrisch in Bezug auf das Verbindungselement ausgestaltet sind.

Besonders vorteilhaft ist es, wenn in der zweiten Umstellposition die zweite Prallfläche einen Abstand zu einer oder der Innenwandung des Ventilgehäuses wahrt. Denn in diesem Fall kann ein Teil der Fluidströmung in einen Totraum gelenkt werden, wie noch genauer zu erläutern sein wird.

Eine weitere vorteilshafte Ausgestaltung sieht vor, dass mindestens eine Durchflussöffnung, vorzugsweise jedoch mindestens drei Durchflussöffnungen, ausgebildet ist/sind, durch die der zweite Strömungsweg verläuft, insbesondere in einen, beispielsweise den zuvor erwähnten, Aufnahmeraum. Vorzugsweise mündet/münden die Durchflussöffnung(en) dabei in den Aufnahmeraum, der das Funktionselement aufnimmt.

In einer bevorzugten Variante ist dabei die mindestens eine Durchflussöffnung in der zweiten Prallfläche ausgebildet.

Daneben ist es bevorzugt, wenn das Funktionselement in Richtung des zweiten Strömungswegs hinter der mindestens einen Durchflussöffnung, also beispielsweise hinter der zweiten Prallfläche, angeordnet ist. Somit kann der zweite Strömungsweg einfach an die Funktionseinheit herangeführt werden. Alternativ oder zusätzlich ist es dadurch einfach erreichbar, dass der Strömungswiderstand der Funktionseinheit zu einer effektiven Angriffsfläche zusammen mit der zweiten Prallfläche beiträgt.

Es kann ferner auch vorgesehen sein, dass die Durchflussöffnungen gleichmäßig in der zweiten Prallfläche verteilt sind. Denn damit kann eine gleichmäßige Durchströmung des Funktionselements sichergestellt werden.

Unabhängig hiervon ist es ferner von Vorteil, wenn die zweite Prallfläche oder eine die zweite Prallfläche umfassende zweite Angriffsfläche größer, vorzugsweise mehr als 1,5mal, zweimal oder sogar dreimal so groß, wie die erste Prallfläche oder eine die erste Prallfläche umfassende erste Angriffsfläche ausgestaltet ist. Denn durch eine solche Ausgestaltung kann ein besonders sicheres Umschalten von der ersten Umstellposition in die zweite Umstellposition erreicht werden. Denn in diesem Fall fallen die durch den Fluiddruck erzeugten Kräfte in Richtung der zweiten Umstellposition sehr viel größer aus als diejenigen in Richtung der ersten Umstellposition.

Zwischen dem Ventilgehäuse und dem Verbindungselement kann eine Fluidkammer ausgebildet sein. Diese Fluidkammer umgibt das Verbindungselement vorzugsweise ringförmig. Hierbei kann der Ventileinlass in die Fluidkammer münden.

Ergänzend oder alternativ kann die Fluidkammer so ausgebildet sein, dass ein durch den Ventileinlass in die Fluidkammer einströmendes Fluid eine Außenfläche des Verbindungselements, vorzugsweise allseitig, umströmen kann. Denn hieraus resultiert ein besonders günstiges Strömungsverhalten des Fluids, sodass insbesondere Rotationen des Ventilkolbens vermeidbar sind.

Gemäß einer weiteren möglichen Ausgestaltung des Umschaltventils ist vorgesehen, dass sich die Fluidkammer, ausgehend von dem Ventileinlass, in Richtung des ersten Endabschnitts verjüngt. Hierbei ist es vorzuziehen, wenn sich die Fluidkammer zusätzlich in Richtung des zweiten Endabschnitts verbreitert.

Durch derartige Ausgestaltungen kann insbesondere erreicht werden, dass eine zweite Durchflussquerschnittsfläche der Fluidkammer im zweiten Übergangsbereich größer ist als eine erste Durchflussquerschnittsfläche der Fluidkammer im Bereich des ersten Endabschnitts. Durch diese Merkmale kann das Umschaltverhalten weiter optimiert werden, wie anhand der Figuren noch genauer zu erläutern sein wird.

Gemäß einer weiteren Ausgestaltung kann das Umschaltverhalten des Umschaltventils insbesondere dadurch verbessert werden, dass eine erste Angriffsfläche des Ventilkolbens, die bei einem am Ventileinlass anliegenden Fluiddruck Flächenkräfte erzeugt, die den Ventilkolben in Richtung der ersten Umstellposition ziehen, kleiner, vorzugsweise mehr als 1,5mal, zweimal oder dreimal kleiner, ausgestaltet ist als eine zweite Angriffsfläche des Ventilkolbens, die bei einem am Ventileinlass anliegenden Fluiddruck solche Flächenkräfte erzeugt, die den Ventilkolben in Richtung der zweiten Umstellposition ziehen. Die erste Angriffsfläche kann hierbei die bereits erwähnte erste Prallfläche umfassen, und/oder die zweite Angriffsfläche kann hierbei die bereits erwähnte zweite Prallfläche und/oder eine weitere Anprallfläche, insbesondere wie im folgenden beschrieben, umfassen. Allgemein können die Angriffsflächen beispielsweise als die jeweils hydraulisch wirksamen Flächen, die eine druckinduzierte Verschiebung des Kolbens bewirken, charakterisiert werden.

Gemäß einer wiederum anderen Ausgestaltung kann das Umschaltverhalten optimiert werden, indem zwischen dem Ventilgehäuse und dem zweiten Endabschnitt des Ventilkolbens, ein, vorzugsweise rotationssymmetrischer, Totraum gebildet ist. In diesen Totraum kann ein durch den Ventileinlass einströmendes Fluid zwar einströmen nicht jedoch hindurch strömen. Von Vorteil ist dabei, dass eine zusätzliche Anprallfläche geschaffen werden kann, die zusätzliche Umstellkräfte bereitstellt, für das Umschalten von der ersten Umstellposition in die zweite Umstellposition. Besonders vorteilhaft ist es hierbei, wenn der Ventilkolben, insbesondere mittels einer, vorzugsweise den Ventilkolben umlaufenden, Dichtung, eine solche weitere Anprallfläche für das Fluid erzeugt. Die Dichtung kann beispielsweise als eine Lippendichtung ausgebildet sein. Von Vorteil ist dabei, dass ein Reibungswiderstand gering ist. Alternativ kann die Dichtung auch als O-Ring, X-Ring oder als Ringnut einer beliebigen Querschnittsform ausgebildet sein.

Die soeben beschriebene Dichtung, insbesondere Lippendichtung kann insbesondere zur Führung des Ventilkolbens eingesetzt werden. Somit kann also vorgesehen sein, dass der Ventilkolben mittels der Lippendichtung in dem Ventilgehäuse, vorzugsweise translativ, geführt ist. Besonders vorteilhaft ist es dabei, wenn eine Dichtlippe der Lippendichtung in Richtung des ersten Ventilauslass zeigt. Denn in diesem Fall kann der anliegende Fluiddruck zur Abdichtung des Ventilkolbens beitragen, da der Fluiddruck die Dichtlippe gegen eine Innenwandung des Ventilgehäuses presst. Um Beschädigungen der Dichtlippe zu vermeiden, ist es dabei bevorzugt, wenn beispielsweise die zweite Prallfläche des Ventilkolbens, nicht jedoch die Lippendichtung, die Bewegung des Ventilkolbens in die erste Umstellposition begrenzt. Die Lippendichtung kann auch in umgekehrter Orientierung montiert werden, beispielsweise um einen Bypass für hohe Drücke zu schaffen.

Für eine kompakte Ausgestaltung des Umschaltventils wird es ferner als vorteilhaft angesehen, wenn der Ventileinlass zwischen dem ersten Ventilauslass und dem zweiten Ventilauslass angeordnet ist. Ergänzend oder alternativ kann auch vorgesehen sein, dass der Ventileinlass in einer äußeren Mantelfläche des Gehäuses in Höhe des Verbindungselements ausgebildet ist.

Gemäß einer weiteren Ausgestaltung ist es ferner vorteilhaft, wenn eine Länge des Verbindungselements, insbesondere in Richtung einer Umstellbewegung des Ventilkolbens, so gewählt ist, dass ein durch den Ventileinlass einströmendes Fluid sowohl in der ersten Umstellposition als auch in der zweiten Umstellposition das Verbindungselement umströmen kann.

Zur Lösung der erfindungsgemäßen Aufgabe ist ferner eine sanitäre Baugruppe vorgesehen mit einem ersten Fluidauslass, einem zweiten Fluidauslass und mit einem Umschaltventil, welches wie zuvor beschrieben und/oder insbesondere nach einem der auf ein Umschaltventil gerichteten Ansprüche ausgestaltet sein kann.

Vorzugsweise ist dabei das Ventilgehäuse des Umschaltventils derart in ein Gehäuse der sanitären Baugruppe eingesetzt, dass der erste Strömungsweg durch den ersten Fluidauslass verläuft, während der zweite Strömungsweg durch den zweiten Fluidauslass der Baugruppe verläuft. Daneben kann ergänzend oder alternativ vorgesehen sein, dass an dem zweiten Fluidauslass ein manuell betätigbares Auslassventil vorgesehen ist, mit dem sich der zweite Strömungsweg freigeben lässt, sodass das Umschaltventil von der ersten Umstellposition in die zweite Umstellposition umschaltet, sofern am Ventileinlass ein Fluiddruck anliegt.

Beispielsweise kann eine Anwendung der Erfindung vorsehen, dass das Umschaltventil in seiner Gebrauchsposition von außen unzugänglich in der sanitären Baugruppe gekapselt angeordnet und/oder durch eine Druckänderung im zweiten Fluidauslass umschaltbar ist. Zusätzliche mechanische oder elektrische oder sonstige Betätigungsmittel sind somit verzichtbar. Dies kann einen konstruktiven Aufwand und/oder einen Fertigungsaufwand verringern.

Die Erfindung wird nun anhand von Ausführungsbeispielen näher beschrieben, ist aber nicht auf diese Ausführungsbeispiele beschränkt.

Weitere Ausführungsbeispiele ergeben sich durch Kombination der Merkmale einzelner oder mehrerer Schutzansprüche untereinander und/oder mit einzelnen oder mehreren Merkmalen des jeweiligen Ausführungsbeispiels. Insbesondere können somit Ausbildungen der Erfindung aus der nachfolgenden Beschreibung eines bevorzugten Ausführungsbeispiels in Verbindung mit der allgemeinen Beschreibung, den Ansprüchen sowie den Zeichnungen gewonnen werden.

Es zeigt:
- Fig. 1: eine detaillierte Querschnittsansicht eines erfindungsgemäßen Umschaltventils, dass in eine sanitäre Baugruppe eingesetzt ist, wobei sich der Ventilkolben in der ersten Umstellposition befindet,
- Fig. 2: das Umschaltventil der Figur 1, wobei sich der Ventilkolben in der zweiten Umstellposition befindet,
- Fig. 3: eine Explosionsansicht des erfindungsgemäßen Umschaltventils der Figur 1,
- Fig. 4: das Umschaltventil der Figur 1 in einer isometrischen Ansicht,
- Fig. 5: das Umschaltventil der Figur 1 in einer isometrischen Ansicht inklusive teilweisem Längsschnitt,
- Fig. 6: ein erstes Beispiel für die Verwendung eines erfindungsgemäßen Umschaltventils, dass sich in der ersten Umstellposition befindet,
- Fig. 7: dasselbe Anwendungsbeispiel der Figur 6, wobei sich das Umschaltventil nun in der zweiten Umstellposition befindet,
- Fig. 8: ein zweites Beispiel für die Verwendung eines erfindungsgemäßen Umschaltventils, dass sich in der ersten Umstellposition befindet,
- Fig. 9: dasselbe Anwendungsbeispiel der Figur 8, wobei sich das Umschaltventil nun in der zweiten Umstellposition befindet,
- Fig. 10: ein weiteres Beispiel für die Verwendung eines erfindungsgemäßen Umschaltventils, dass sich in der ersten Umstellposition befindet,
- Fig. 11: dasselbe Anwendungsbeispiel der Figur 10, wobei sich das Umschaltventil nun in der zweiten Umstellposition befindet.

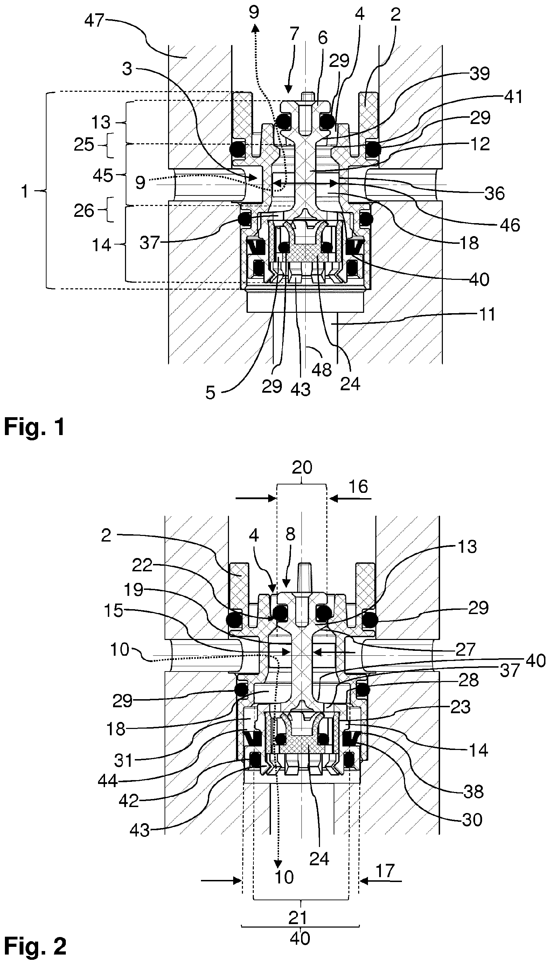

Die Figur 1 zeigt ein erfindungsgemäßes Umschaltventil 1 in einer Einbausituation innerhalb eines Gehäuses 47 einer sanitären Baugruppe 32. Das Umschaltventil 1 umfasst einen Ventilkolben 6, der sich in einer Translationsbewegung von der in Figur 1 gezeigten ersten Umstellposition 7 innerhalb des Ventilgehäuses 2 in eine zweite Umstellposition 8 bewegen lässt.

In der ersten Umstellposition 7 kann ein durch den in einer Mantelfläche des Ventilgehäuses 2 ausgebildeten Ventileinlass 3 strömendes Fluid entlang des in Figur 1 gezeigten ersten Strömungswegs 9 durch den ersten Ventilauslass 4 hindurch strömen. In der zweiten Umstellposition 8 hingegen (Vgl. Fig 2) ist bei dem in den Figuren 1 und 2 gezeigten Ausführungsbeispiel der erste Ventilauslass 4 vollständig geschlossen und das Fluid folgt dem in Figur 2 gezeigten zweiten Strömungsweg 10 durch den zweiten Ventilauslass 5 hindurch.

Der Ventilkolben 6 weist einen ersten Endabschnitt 13 auf in dessen Bereich der erste Ventilauslass 4 ausgebildet ist sowie einen zweiten Endabschnitt 14 in dessen Bereich der zweite Ventilauslass 5 ausgebildet ist.

Die beiden Endabschnitte 13, 14 sind mittels eines Verbindungselements 12 miteinander verbunden. Hierbei ist ein Außendurchmesser 15 des Verbindungselements 12 so gewählt, dass dieser kleiner ist als ein Außendurchmesser 17 des zweiten Endabschnitts 14. Dadurch können große Fluidmengen auf den zweiten Endabschnitt 14 und damit auf den Ventilkolben 6 beim Umschalten von der ersten Umstellposition 7 in die zweite Umstellposition 8 wirken, sodass das Umschalten auch bei niedrigen Fluiddrücken sicher gewährleistet werden kann.

Auch der Außendurchmesser 16 des ersten Endabschnitts 13 ist größer gewählt als der Außendurchmesser 15 des Verbindungselements 12. Dadurch ergibt sich die in den Figuren 1 und 2 erkennbar hantelförmige äußere Form des Ventilkolbens 6.

In Höhe eines ersten Übergangsbereichs 25 von dem Verbindungselement 12 zu dem ersten Endabschnitt 13 bildet der Ventilkolben 6 eine erste Prallfläche 27 und in Höhe eines zweiten Übergangsbereichs 26 von dem Verbindungselement 12 zu dem zweiten Endabschnitt 14 eine zweite Prallfläche 28 aus. Diese beiden Prallflächen 27, 28 gehen jeweils direkt in das Verbindungselement 12 über und sind jeweils rotationssymmetrisch in Bezug auf das Verbindungselement 12 ausgestaltet. Wie in Figur 2 zu erkennen, wahrt dabei die zweite Prallfläche 28 in der zweiten Umstellposition 8 einen Abstand zu der Innenwandung 36 des Ventilgehäuses 2.

Liegt ein Fluiddruck am Ventileinlass 3 an und ist der zweite Strömungsweg 10 gerade blockiert, beispielsweise weil der in Figur 1 gezeigte Abschnitt 11 des zweiten Strömungswegs 10 nicht freigegeben ist, so wird der Ventilkolben 6 durch Kräfte, die durch das Anliegen des Fluiddrucks an der ersten Prallfläche 27 des Ventilkolbens 6 entstehen, in die erste Umstellposition 7 gezogen.

Wird nun bei weiterhin am Ventileinlass 3 anliegenden Fluiddruck der zweite Strömungsweg 10 freigegeben, so kann das Fluid durch den zweiten Ventilauslass 5 des Ventilgehäuses 2 strömen, wie dies in Figur 2 anhand des gestrichelt dargestellten zweiten Strömungswegs 10 gezeigt ist. Durch diese zweite nun mögliche Fluidströmung werden zusätzliche Kräfte erzeugt, die durch das Anliegen des Fluiddrucks an der zweiten Prallfläche 28 des Ventilkolbens 6 entstehen. Somit kann also der Ventilkolben 6 mittels eines am Ventileinlass 3 anliegenden Fluiddrucks von der ersten Umstellposition 7 in die zweite Umstellposition 8 umgeschaltet werden, sobald der zweite Strömungsweg 10, insbesondere dessen Abschnitt 11 (Vgl. Fig.1), der sich an den zweiten Ventilauslass 5 anschließt, freigegeben wird.

Bei dem in Figur 1 gezeigten Ausführungsbeispiel ist ferner ein abdichtender O-Ring 29 an dem ersten Endabschnitt 13 ausgebildet, der mit einer rotationssymmetrischen Dichtfläche 41, die durch eine Innenwandung 36 des Ventilgehäuses 2 gebildet ist, zusammenwirkt. Der erste Endabschnitt 13 bildet dadurch im Bereich des ersten Ventilauslasses 4 eine Ventildichtung 22 mit dem Ventilgehäuse 2 aus, die sich durch Translation des Ventilkolbens 6 schließen und öffnen lässt.

Wie in Fig. 2 gut zu erkennen, bildet der zweite Endabschnitt 14 des Ventilkolbens 6 hingegen einen Aufnahmeraum 23 aus, in welchen ein als eine Patrone ausgebildetes Funktionselement 24 eingesetzt ist. Der zweite Strömungsweg 10 verläuft dabei durch das Funktionselement 24 hindurch.

Bei dem in den Figuren 1 und 2 gezeigten Ausführungsbeispiel ist das Funktionselement 24 ein Durchflussmengenregler, der mithilfe eines O-Rings 29 (Vgl. Fig.1) die durch den zweiten Ventilauslass 5 strömende Fluidmenge, weitgehend unabhängig von dem in der Fluidkammer 18 (Vgl. unten) herrschenden Fluiddruck, auf einen bestimmten Wert regelt.

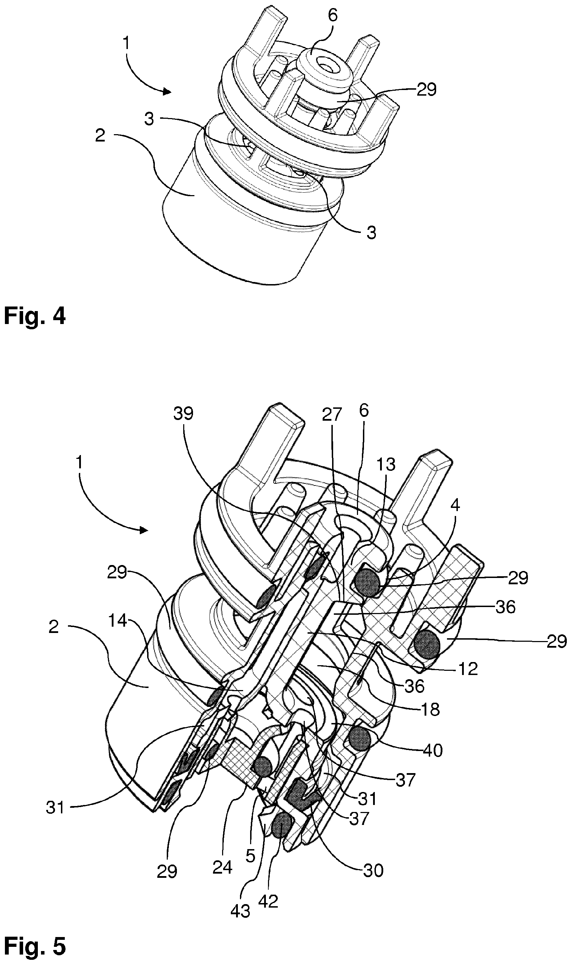

Zur sicheren Gewährleistung dieser Funktionalität ist das Funktionselement 24 mittels mehrerer Haltebacken 43 in dem Aufnahmeraum 23 sicher gehalten (vergleiche Figur 2). Dabei drückt ein aus einem Elastomer ausgebildeter Haltering 42 die Haltebacken 43 konzentrisch nach innen, sodass Haltenasen der Haltebacken 43 das Funktionselement 24 umschließen (vergleiche Figur 5).

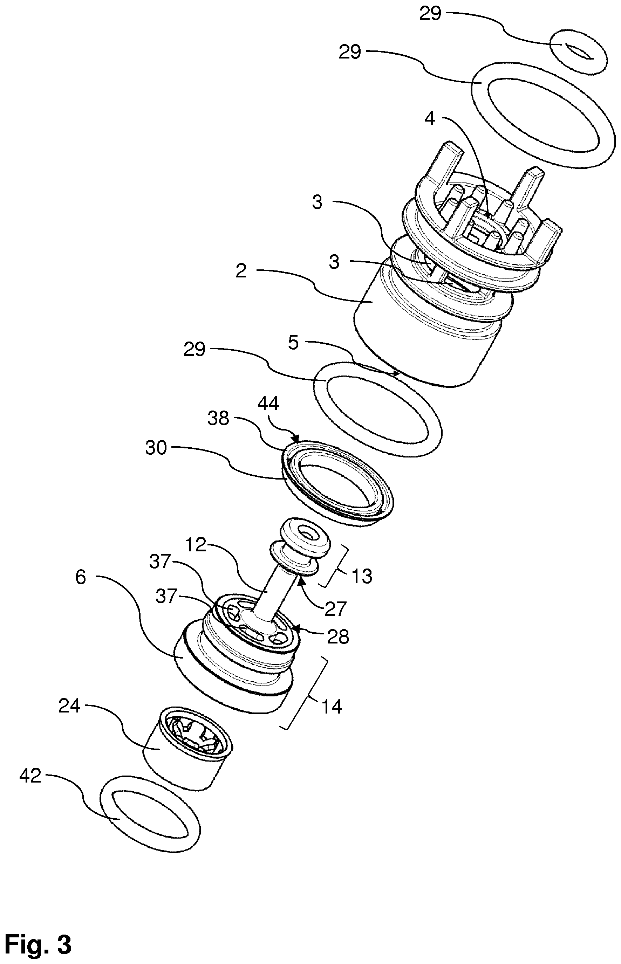

Die einzelnen Bestandteile des erfindungsgemäßen Umschaltventils 1 sind in der Explosionsansicht der Figur 3 zu erkennen. Insbesondere ist das Umschaltventil 1 derart ausgebildet, dass es durch einfaches Ineinanderstecken aller Komponenten zusammensetzbar ist.

Bei dem in den Figuren 1 und 2 gezeigten Ausführungsbeispiel ist das Verbindungselement 12 einstückig mit dem Ventilkolben 6 und als ein Kolbenschaft aus einem Vollmaterial ausgebildet (Vgl. auch Fig. 5). Eine Außenfläche 19 des Ventilkolbens 6 ist dabei als eine zylindrische Mantelfläche ausgebildet.

Zusätzlich ist das Ventilgehäuse 2 so ausgebildet, dass das Verbindungselement 12 in beiden Umstellpositionen 7, 8 stets beabstandet von einer Innenwandung 36 des Ventilgehäuses 2 angeordnet ist. Mit anderen Worten ist also eine Fluidkammer 18 zwischen dem Ventilkolben 6 und dem Ventilgehäuse 2 gebildet, wie dies die Fig. 5 zeigt. Hierbei ist eine Länge 45 (Vgl. Fig.1) des Verbindungselements 12 gerade so gewählt, dass in beiden Umstellpositionen 7 und 8 ein durch den Ventileinlass 3 einströmendes Fluid eine Außenfläche 19 das Verbindungselements 12 allseitig umströmen kann.

Die Fluidkammer 18 umgibt den Ventilkolben 6, genauer das Verbindungselement 12, hierbei ringförmig. Daneben ist die Fluidkammer 18 rotationssymmetrisch zu einer Längsachse 48 des Ventilkolbens 6 ausgebildet (Vgl. Fig.1). Der Ventilkolben 6 wiederum ist zentrisch in Bezug auf das Ventilgehäuse 2 angeordnet (Vgl. Fig. 5).

Wie durch die beiden gestrichelten Strömungswege 9 und 10 in den Figuren 1 und 2 gezeigt, mündet der Ventileinlass 3 in die Fluidkammer 18, wie dies auch die Zusammenschau der Figuren 3 und 4 illustriert.

In Höhe des Ventileinlass 3 weist die Fluidkammer 18 einen Innendurchmesser 46 auf (Vgl. Fig. 1), welcher mehr als dreimal so groß gewählt ist wie der Außendurchmesser 15 des Verbindungselements 12 (Vgl. auch Figur 5). Bei weiteren Ausführungsbeispielen ist der Innendurchmesser 46 mehr als 1,5mal oder zweimal so groß ausgebildet wie der Außendurchmesser 15.

Ausgehend von dem Ventileinlass 8 verjüngt sich dabei die Fluidkammer 18 in Richtung des ersten Endabschnitts 13 und verbreitet sich in Richtung des zweiten Endabschnitts 14, wie anhand der Schrägen der Innenwandung 36 des Ventilgehäuses 2 in Figur 1 gut zu erkennen ist. Dadurch kann eine im Vergleich zu bisher bekannten Umschaltventilen größere Fluidmenge durch das Umschaltventil 1 beim Umschalten in die zweite Umstellposition 8 fließen, was für ein robustes Schaltverhalten von großem Vorteil ist.

Die Fluidkammer 18 ist ferner so ausgebildet, dass eine erste Durchflussquerschnittsfläche 20, die den Fluidfluss im Bereich des ersten Endabschnitts 13 des Ventilkolbens 6 durch den ersten Ventilauslass 4 bestimmt, kleiner ausgebildet ist, als eine zweite Durchflussquerschnittsfläche 21, die im Bereich des zweiten Endabschnitts 14 des Ventilkolbens 6 den Fluidfluss in Richtung der zweiten Angriffsfläche 40 (im Beispiel gebildet durch die zweite Prallfläche 28 sowie die weitere Anprallfläche 44 - vgl. weiter unten) bestimmt. Hierbei strömt durch die zweite Durchflussquerschnittsfläche 21 insbesondere solches Fluid hindurch, welches in einen Totraum 31 fließt, der den Aufnahmeraum 23 rotationssymmetrisch umgibt (vergleiche Figur 2). Aus den Figuren ist weiter ersichtlich, dass die erste Prallfläche 27 die erste Angriffsfläche 39 bildet.

Bei weiteren Ausführungsbeispielen kann die erste Prallfläche 27 mit der ersten Angriffsfläche 39 und/oder die zweite Prallfläche 28 mit der zweiten Angriffsfläche 40 übereinstimmen und/oder kann die erste Prallfläche 27 in der ersten Angriffsfläche 39 enthalten sein.

Wie anhand der Figur 2 gut zu erkennen ist, fließt die Fluidmenge, die beim Umschalten in den (variablen) Totraum 31 strömt, nicht durch den zweiten Ventilauslass 5. Der Sinn des sich mit der Position des Ventilkolbens 6 sich verändernden Totraums 31 besteht vielmehr darin, zusätzliche Umstellkräfte zu erzeugen, die an einer weiteren Anprallfläche 44 entstehen, um das Umschalten des Ventilkolbens 6 in die zweite Umstellposition 8 zu verbessern. Aus demselben Grund ist beispielsweise die zweite Prallfläche 28 mehr als dreimal so groß ausgebildet wie die erste Prallfläche 27. Bei weiteren Ausführungsbeispielen ist die zweite Prallfläche 28 mehr als 1,5mal oder mehr als zweimal so groß ausgebildet wie die erste Prallfläche 27.

Damit das Fluid von der Fluidkammer 18 in das Funktionselement 24 fließen kann, welches entlang des zweiten Strömungsweges 10 hinter der zweiten Prallfläche 28 angeordnet ist, sind in der zweiten Prallfläche 28 fünf nierenförmige Durchflussöffnungen 37 ausgebildet (vergleiche Figur 3), die gleichmäßig entlang eines Umfangs des zweiten Endabschnitts 14 des Ventilkolbens 6 angeordnet sind.

Wie man in Figur 1 ebenfalls gut erkennen kann, ist die Länge 45 des mittleren Abschnitts des Ventilkolbens 6, welcher das Verbindungselement 12 ausbildet, gerade so gewählt, dass in beiden Umstellpositionen 7, 8 gewährleistet ist, dass ein durch den Ventileinlass 3 einströmendes Fluid sowohl entlang des ersten Strömungswegs 9 als auch entlang des zweiten Strömungswegs 10 jeweils das Verbindungselement 12 allseitig umströmen kann. Dadurch kann das Fluid nahezu ungehindert auf die erste Angriffsfläche 39 bzw. die zweite Angriffsfläche 40 strömen, um die für das jeweilige Umstellen des Ventilkolbens 6 notwendigen Umstellkräfte zu erzeugen.

Der Ventileinlass 3 ist bei dem in den Figuren 1 und 2 gezeigten Ausführungsbeispiel zwischen dem ersten Ventilauslass 4 und dem zweiten Ventilauslass 5 angeordnet, mündet daher in die Fluidkammer 18 und wird durch mehrere Durchflussöffnungen in einer äußeren Mantelfläche des Ventilgehäuses 2 gebildet, wie dies in Figur 4 gut zu erkennen ist.

Wie in Figur 2 gezeigt, weist der Ventilkolben 6 neben der zweiten Prallfläche 28 eine weitere Anprallfläche 44 auf. Die weitere Anprallfläche 44 wird dabei durch eine Dichtlippe 38 einer Lippendichtung 30 gebildet. Die Lippendichtung 30 umgibt den zweiten Endabschnitt 14 des Ventilkolbens 6 ringförmig. Bei weiteren Ausführungsbeispielen kann statt der Lippendichtung eine allgemeine Dichtung, beispielsweise ein O-Ring oder ein X-Ring oder ein Ring mit einem beliebigen Querschnitt ausgebildet sein.

Die zweite Prallfläche 28 und die weitere Anprallfläche 44 bilden zusammen eine zweite Angriffsfläche 40 aus, wobei die an dieser zweiten Angriffsfläche 40 durch den Fluiddruck entstehenden Kräfte den Ventilkolben 6 gerade in die zweite Umstellposition 8 ziehen (vergleiche Figur 2).

Damit das Umstellen von der ersten Umstellposition 7 in die zweite Umstellposition 8 auch bei niedrigen Fluiddrücken robust abläuft, ist entscheidend, dass die zweite Angriffsfläche 40 sehr viel größer ausgebildet ist, als eine erste Angriffsfläche 39, die ihrerseits Kräfte erzeugt, die den Ventilkolben 6 in die erste Umstellposition 7 ziehen. Diese erste Angriffsfläche 39, die bei dem in den Figuren 1 und 2 gezeigten Ausführungsbeispiel im Bereich des ersten Endabschnitts 13 des Ventilkolbens 6 ausgebildet (Vgl. Fig.1) ist, ist daher mehr als dreimal kleiner als die zweite Angriffsfläche 40 gewählt. Bei weiteren Ausführungsbeispielen ist die erste Angriffsfläche 39 mehr als 1,5mal oder mehr als zweimal kleiner ausgebildet als die zweite Angriffsfläche 40.

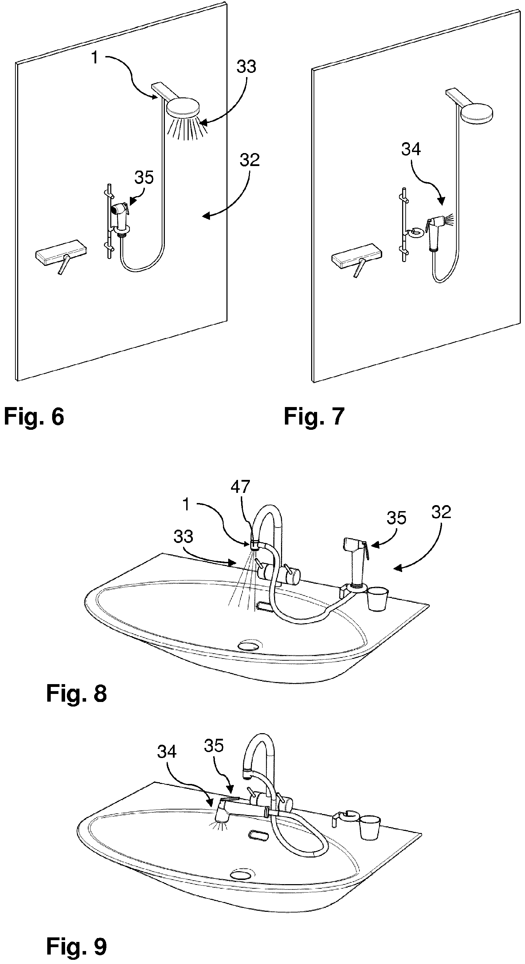

Die Figuren 6-11 schließlich zeigen drei verschiedene Anwendungsfälle, in denen ein erfindungsgemäßes Umschaltventil 1 in vorteilhafter Weise verwendet werden kann. Hierbei ist vorgesehen, dass das Umschaltventil 1 derart in ein Gehäuse 47 einer sanitären Baugruppe 32 eingesetzt ist, dass der erste Strömungsweg 9 durch einen ersten Fluidauslass 33 der sanitären Baugruppe 32 und der zweite Strömungsweg 10 durch einen zweiten Fluidauslass 34 der sanitären Baugruppe 32 geführt ist. Daneben befindet sich, vorzugsweise in größerem Abstand zu dem Umschaltventil 1, an dem zweiten Fluidauslass 34 ein Auslassventil 35, mit dem ein Benutzer den zweiten Strömungsweg 10 freigeben kann.

Befindet sich das Umschaltventil 1 in der ersten Umstellposition 7, wie in den Figuren 6, 8 und 10 gezeigt, so kann das Fluid, vorausgesetzt es liegt ein Fluiddruck am Ventileinlass 3 des Umschaltventils an, durch den ersten Ventilauslass 4 des Umschaltventils 1 und damit aus dem ersten Fluidauslass 33 der Baugruppe 32 fließen. Bei diesem Ausfließen treten Umstellkräfte an der ersten Angriffsfläche 39 des Umschaltventils 1 auf, die den Ventilkolben 6 in die erste Umstellposition ziehen bzw. dort halten. Somit ist in dieser Situation, die in der Figur 1 gezeigte Ventildichtung 22 geöffnet.

Durch Öffnen des Auslassventils 35 kann nun der zweite Strömungsweg 10 freigegeben werden, wodurch das Umschaltventil 1 aus der Ferne bedient wird. In der Folge kommt es zu einem starken Abfluss des Fluids aus der Fluidkammer 18 des Umschaltventils 1 durch den zweiten Ventilauslass 5 und entlang des zweiten Strömungsweges bis zu dem zweiten Fluidauslass 34 der Baugruppe 32 (vergleiche Figur 2 und die Figuren 7, 9 und 11). Die dabei an der zweiten Angriffsfläche 40 des Ventilkolbens 6 auftretenden Umstellkräfte überwiegen die zuvor erwähnten Kräfte, die an der ersten Angriffsfläche 39 weiterhin entstehen, sodass der Ventilkolben 6 in die zweite Umstellposition 8 gezogen wird.

Damit wird die in der Figur 2 gezeigte Situation erreicht, in welcher die Ventildichtung 22 im Bereich des ersten Ventilauslass 4 geschlossen ist und das Fluid aus der Fluidkammer 18 durch die in der zweiten Prallfläche 28 des Ventilkolbens 6 ausgebildeten Durchflussöffnungen 37 und das stromabwärts angeordnete Funktionselement 24 hindurch und aus dem zweiten Ventilauslass 5 des Umschaltventils 1 entlang des zweiten Strömungswegs 10 bis zu dem zweiten Fluidauslass 34 fließt, wie dies in den Figuren 7, 9 und 11 illustriert ist.

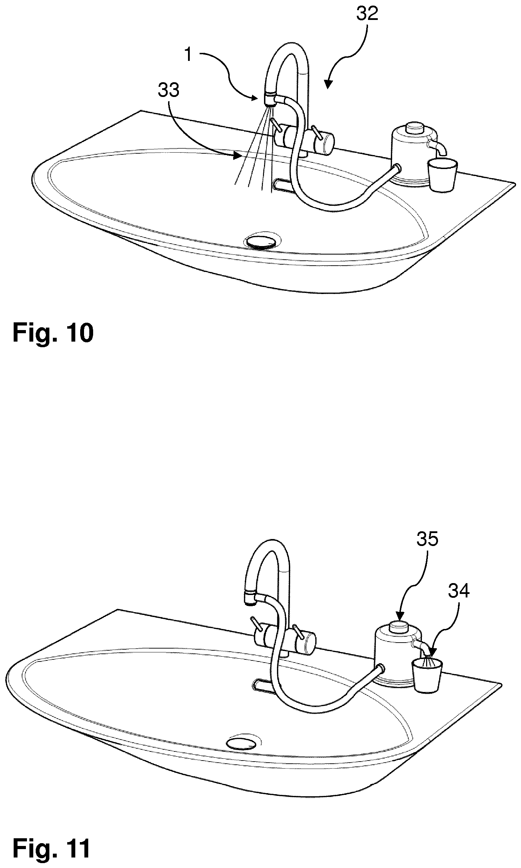

Das Auslassventil 35 kann dabei wahlweise entweder als ein Hebel, beispielsweise an einer Brause, wie in den Figuren 6 bis 9, oder z.B. als ein Drucktaster, wie in den Figuren 10 und 11 illustriert, ausgestaltet sein.

Zusammenfassend wird zur Verbesserung der Schalteigenschaften eines sanitären Umschaltventils 1 insbesondere vorgeschlagen, dass ein Ventilkolben 6 des Umschaltventils 1 derart ausgestaltet wird, dass ein Fluid, welches durch einen Ventileinlass 3 des Umschaltventils 1 in ein Ventilgehäuse 2 des Umschaltventils 1 einströmt, sowohl in einer ersten Umstellposition 7 als auch in einer zweiten Umstellposition 8 ein Verbindungselement 12, welches einen mittleren Abschnitt des Ventilkolbens 6 ausbildet, allseitig umströmen kann (Vgl. Fig. 5). Hierzu ist vorgesehen, dass ein Außendurchmesser 15 des Verbindungselements 12 kleiner als ein Außendurchmesser 17 eines zweiten Endabschnitts 14 des Ventilkolbens 6 ist, wobei der zweite Endabschnitt 14 im Bereich eines zweiten Ventilauslass 5 des Ventilgehäuses 2 angeordnet ist. Mit einem solchen Umschaltventil 1 kann somit das Fluid ausgehend von einem ersten Strömungsweg 9, welcher durch einen ersten Ventilauslass 4 des Ventilgehäuses 2 verläuft, mittels des, vorzugsweise translativ innerhalb des Ventilgehäuses 2 geführten, Ventilkolbens 6, entlang eines zweiten Strömungswegs 10 geführt werden, der durch den zweiten Ventilauslass 5 verläuft. Der Ventilkolben 6 kann dabei mit dem Ventilgehäuse 2 in der ersten Umstellposition 7 den ersten Ventilauslass 4 bestimmen. In der zweiten Umstellposition 8 kann der Ventilkolben 6 hingegen den ersten Ventilaus 4 vollständig verschließen. Daneben kann der Ventilkolben 6 den zweiten Ventilauslass 5 mit dem Ventilgehäuse 2 bestimmen. Dabei kann der zweite Ventilauslass 5 bevorzugt sowohl in der ersten Umstellposition 7 als auch in der zweiten Umstellposition 8 zumindest teilweise geöffnet sein.

### Bezugszeichenliste

- 1: Umschaltventil
- 2: Ventilgehäuse
- 3: Ventileinlass
- 4: erster Ventilauslass
- 5: zweiter Ventilauslass
- 6: Ventilkolben
- 7: erste Umstellposition
- 8: zweite Umstellposition
- 9: erster Strömungsweg
- 10: zweiter Strömungsweg
- 11: Abschnitt (von 10)
- 12: Verbindungselement
- 13: erster Endabschnitt (von 6)
- 14: zweiter Endabschnitt (von 6)
- 15: Außendurchmesser (von 12)
- 16: Außendurchmesser (von 13)
- 17: Außendurchmesser (von 14)
- 18: Fluidkammer
- 19: Außenfläche (von 12)
- 20: erste Durchflussquerschnittsfläche
- 21: zweite Durchflussquerschnittsfläche
- 22: Ventildichtung
- 23: Aufnahmeraum
- 24: Funktionselement
- 25: erster Übergangsbereich
- 26: zweiter Übergangsbereich
- 27: erste Prallfläche
- 28: zweite Prallfläche
- 29: O-Ring
- 30: Lippendichtung
- 31: Totraum
- 32: Baugruppe
- 33: erster Fluidauslass (von 32)
- 34: zweiter Fluidauslass (von 32)
- 35: Auslassventil
- 36: Innenwandung (von 2)
- 37: Durchflussöffnung
- 38: Dichtlippe (von 30)
- 39: erste Angriffsfläche
- 40: zweite Angriffsfläche
- 41: Dichtfläche
- 42: Haltering
- 43: Haltebacken
- 44: Anprallfläche
- 45: Länge (von 12)
- 46: Innendurchmesser (von 3)
- 47: Gehäuse (von 32)
- 48: Längsachse von 12

## Patentansprüche

1. Sanitäres Umschaltventil (1) mit
- einem Ventilgehäuse (2), das
- einen Ventileinlass (3),
- einen ersten Ventilauslass (4) und
- einen zweiten Ventilauslass (5) ausbildet, und mit
- einem Ventilkolben (6), der
- von einer ersten Umstellposition (7), in der ein durch den Ventileinlass (3) einströmendes Fluid entlang eines ersten Strömungswegs (9) durch den ersten Ventilauslass (4) geführt werden kann, in
- eine zweite Umstellposition (8), in der das Fluid entlang eines zweiten Strömungswegs (10) durch den zweiten Ventilauslass (.5) geführt werden kann, bewegbar ist, und mit
- einem Funktionselement (24), das einen Fluidfluss entlang des zweiten Strömungswegs (10) regelt,
**dadurch gekennzeichnet,**
- **dass** der Ventilkolben (6) ein Verbindungselement (12) aufweist, das einen ersten Endabschnitt (13) des Ventilkolbens (6) im Bereich des ersten Ventilauslasses (4) mit einem zweiten Endabschnitt (14) des Ventilkolbens (6) im Bereich des zweiten Ventilauslasses (5) verbindet,
- wobei ein Außendurchmesser (15) des Verbindungselements (12) kleiner als ein Außendurchmesser (17) des zweiten Endabschnitts. (14) ist,
- wobei der zweite Endabschnitt (14) des Ventilkolbens (6) einen Aufnahmeraum (23) ausbildet, in den das Funktionselement (24) eingesetzt ist,
- wobei mindestens ein elastischer Haltebacken (43) vorgesehen ist, der das Funktionselement (24) in dem Aufnahmeraum (23) fixiert und
- wobei der mindestens eine Haltebacken (43) mittels eines Halterings (42) in einer das Funktionselement (24) fixierenden Stellung gehalten ist.

2. Umschaltventil (1) nach Anspruch 1, wobei der Ventilkolben (6) mittels eines am Ventileinlass (3) anliegenden Fluiddrucks von der ersten Umstellposition (7) in die zweite Umstellposition (8) umschaltbar ist, sobald der zweite Strömungsweg (10) freigegeben ist.

3. Umschaltventil (1) nach einem der vorhergehenden Ansprüche, wobei der erste Endabschnitt (13) im Bereich des ersten Ventilauslasses (4) eine Ventildichtung (22) mit dem Ventilgehäuse (2) ausbildet.

4. Umschaltventil (1) nach einem der vorhergehenden Ansprüche, wobei der, vorzugsweise maximale oder mittlere Außendurchmesser (15) des Verbindungselements (12) kleiner als ein Außendurchmesser (16) des ersten Endabschnitts (13) ist.

5. Umschaltventil (1) nach einem der vorhergehenden Ansprüche, wobei das Verbindungselement (12) stabförmig und/oder als ein Kolbenschaft, vorzugsweise aus Vollmaterial, ausgebildet ist.

6. Umschaltventil (1) nach einem der vorhergehenden Ansprüche, wobei der Ventilkolben (6) in Höhe eines ersten Übergangsbereichs (25) von dem Verbindungselement (12) zu dem ersten Endabschnitt (13) eine erste Prallfläche (27) ausbildet.

7. Umschaltventil (1) nach einem der vorhergehenden Ansprüche, wobei der Ventilkolben (6) in Höhe eines zweiten Übergangshereichs (26) von dem Verbindungselement (12) zu dem zweiten Endabschnitt (14) eine zweite Prallfläche (28) ausbildet und
- wobei in der zweiten Prallfläche (28) mindestens eine Durchflussöffnung (37) ausgebildet ist, durch die der zweite Strömungsweg (10) in den Aufnahmeraum (23) verläuft.

8. Umschaltventil (1) nach Anspruch 7, wobei das Funktionselement (24) in Richtung des zweiten Strömungswegs (10) hinter der wenigstens einen Durchflussöffnung (37) angeordnet ist.

9. Umschaltventil (1) nach einem der vorhergehenden Ansprüche, wobei zwischen dem Ventilgehäuse (2) und dem Verbindungselement (12) eine Fluidkammer (18) ausgebildet ist, die das Verbindungselement (12) ringförmig umgibt.

10. Umschaltventil (1) nach Anspruch 9, wobei sich die Fluidkammer (18), ausgehend von dem Ventileinlass (3), in Richtung des ersten Endabschnitts (13) verjüngt und in Richtung des zweiten Endabschnitts (14) verbreitert, derart, dass eine zweite Durchflussquerschnittsfläche (21) der Fluidkammer (18) im zweiten Übergangsbereich (26) größer ist als eine erste Durchflussquerschnittsfläche (20) der Fluidkammer (18) im Bereich des ersten Endabschnitts (13).

11. Umschaltventil (1) nach einem, der vorhergehenden Ansprüche, wobei eine erste Angriffsfläche (39) des Ventilkolbens (6), die bei einem am Ventileinlass (3) anliegenden Fluiddruck Flächenkräfte erzeugt, die den Ventilkolben (6) in Richtung der ersten Umstellposition (7) ziehen, kleiner ausgestaltet ist als eine zweite Angriffsfläche (40) des Ventilkolbens (6:), die bei einem am Ventileinlass (3) anliegenden Fluiddruck Flächenkräfte erzeugt, die den Ventilkolben (6) in Richtung der zweiten Umstellposition (8) ziehen.

12. Umschaltventil (1) nach einem der vorhergehenden Ansprüche, wobei zwischen dem Ventilgehäuse (2.) und dem zweiten Endabschnitt (14) des Ventilkolbens (6), ein Totraum (31) gebildet ist, in den ein durch den Ventileinlass (3) einströmendes Fluid zwar einströmen nicht jedoch hindurch strömen kann.

13. Umschaltventil (1) nach Anspruch in Kombination mit Anspruch 6 und/oder mit Anspruch 7, wobei der Ventilkolben (6) mittels einer den Ventilkolben (6) umlaufenden Dichtung eine weitere Anprallfläche (44) für das Fluid erzeugt und der Ventilkolben mittels der Dichtung, in dem Ventilgehäuse (2) geführt ist.

14. Umschaltventil (1) nach einem der vorhergehenden Ansprüche, wobei der Ventileinlass (3) in einer äußeren Mantelfläche des Gehäuses (3) in Höhe des Verbindungselements (12) ausgebildet ist.

15. Sanitäre Baugruppe (32) mit einem ersten Fluidauslass (33), einem zweiten Fluidauslass (34) und mit einem Umschaltventil (1) nach einem der vorhergehenden Ansprüche, wobei das Ventilgehäuse (2) derart in ein Gehäuse (47) der Baugruppe (32) eingesetzt ist, dass der erste Strömungsweg (9) durch den ersten Fluidauslass (33) verläuft, während der zweite Strömungsweg (10) durch den zweiten Fluidauslass (34) der Baugruppe verläuft.

16. Sanitäre Baugruppe (32) nach Anspruch 15, wobei das Umschaltventil (1) in seiner Gebrauchsposition durch eine Druckänderung im zweiten Fluidauslass (34) umschaltbar ist.

## Claims

1. Sanitary switchover valve (1) with
- a valve housing (2) which configures
- a valve inlet (3),
- a first valve outlet (4) and
- a second valve outlet (5), and with
- a valve piston (6) which can be moved
- from a first changeover position (7), in which a fluid which flows in through the valve inlet (3) can be conducted along a first flow path (9) through the first valve outlet (4), into
- a second changeover position (8), in which the fluid can be conducted along a second flow path (10) through the second valve outlet (5), and with
- a functional element (24) which regulates a fluid flow along the second flow path (10),
**characterized**
- **in that** the valve piston (6) has a connecting element (12) which connects a first end section (13) of the valve piston (6) in the region of the first valve outlet (4) to a second end section (14) of the valve piston (6) in the region of the second valve outlet (5),
- an external diameter (15) of the connecting element (12) being smaller than an external diameter (17) of the second end section (14),
- the second end section (14) of the valve piston (6) configuring a receiving space (23), into which the functional element (24) is inserted,
- at least one elastic retaining jaw (43) being provided which fixes the functional element (24) in the receiving space (23), and
- the at least one retaining jaw (43) being retained by means of a retaining ring (42) in a position which fixes the functional element (24).

2. Switchover valve (1) according to Claim 1, it being possible for the valve piston (6) to be switched over from the first changeover position (7) into the second changeover position (8) by means of a fluid pressure which prevails at the valve inlet (3), as soon as the second flow path (10) is opened.

3. Switchover valve (1) according to either of the preceding claims, the first end section (13) configuring, in the region of the first valve outlet (4), a valve seal (22) with the valve housing (2).

4. Switchover valve (1) according to one of the preceding claims, the preferably maximum or mean external diameter (15) of the connecting element (12) being smaller than an external diameter (16) of the first end section (13).

5. Switchover valve (1) according to one of the preceding claims, the connecting element (12) being configured in a rod-shaped manner and/or as a piston skirt, preferably from solid material.

6. Switchover valve (1) according to one of the preceding claims, the valve piston (6) configuring a first deflector face (27) at the level of a first transition region (25) from the connecting element (12) to the first end section (13).

7. Switchover valve (1) according to one of the preceding claims, the valve piston (6) configuring a second deflector face (28) at the level of a second transition region (26) from the connecting element (12) to the second end section (14), and
- at least one throughflow opening (37) being configured in the second deflector face (28), through which throughflow opening (37) the second flow path (10) runs into the receiving space (23).

8. Switchover valve (1) according to Claim 7, the functional element (24) being arranged downstream of the at least one throughflow opening (37) in the direction of the second flow path (10).

9. Switchover valve (1) according to one of the preceding claims, a fluid chamber (18) which surrounds the connecting element (12) in an annular manner being configured between the valve housing (2) and the connecting element (12).

10. Switchover valve (1) according to Claim 9, the fluid chamber (18), starting from the valve inlet (3), tapering in the direction of the first end section (13) and widening in the direction of the second end section (14), in such a way that the second throughflow cross-sectional area (21) of the fluid chamber (18) in the second transition region (26) is greater than a first throughflow cross-sectional area (20) of the fluid chamber (18) in the region of the first end section (13).

11. Switchover valve (1) according to one of the preceding claims, a first action face (39) of the valve piston (6), which first action face (39) generates area forces in the case of a fluid pressure which prevails at the valve inlet (3), which area forces pull the valve piston (6) in the direction of the first changeover position (7), being of smaller configuration than a second action face (40) of the valve piston (6), which second action face (40) generates area forces in the case of a fluid pressure which prevails at the valve inlet (3), which area forces pull the valve piston (6) in the direction of the second changeover position (8).

12. Switchover valve (1) according to one of the preceding claims, a dead space (31) being formed between the valve housing (2) and the second end section (14) of the valve piston (6), into which dead space (31) a fluid which flows in through the valve inlet (3) can admittedly flow, but the said fluid cannot flow through the said dead space (31).

13. Switchover valve (1) according to Claim 12 in combination with Claims 6 and/or with Claim 7, the valve piston (6) generating a further impact face (44) for the fluid by means of a seal surrounding the valve piston (6), and the valve piston being guided in the valve housing (2) by means of the seal.

14. Switchover valve (1) according to one of the preceding claims, the valve inlet (3) being configured in an outer shell face of the housing (3) at the level of the connecting element (12).

15. Sanitary assembly (32) with a first fluid outlet (33), a second fluid outlet (34) and with a switchover valve (1) according to one of the preceding claims, the valve housing (2) being inserted into a housing (47) of the assembly (32) in such a way that the first flow path (9) runs through the first fluid outlet (33), whereas the second flow path (10) runs through the second fluid outlet (34) of the assembly.

16. Sanitary assembly (32) according to Claim 15, it being possible for the switchover valve (1) to be switched over in its use position by way of a pressure change in the second fluid outlet (34).

## Revendications

1. Soupape de commutation sanitaire (1), comprenant :
- un carter de soupape (2) qui forme :
- une entrée de soupape (3),
- une première sortie de soupape (4) ; et
- une seconde sortie de soupape (5), et
- un piston de soupape (6) qui passe :
- d'une première position de commutation (7), dans laquelle un fluide qui s'écoule à travers l'entrée de soupape (3) peut être guidé le long d'une première voie d'écoulement (9) à travers la première sortie de soupape (4), à
- une seconde position de commutation (8) dans lequel le fluide peut être guidé le long d'une seconde voie d'écoulement (10) à travers la seconde sortie de soupape (5), et
- un élément fonctionnel (24) qui régule un écoulement de fluide le long de la seconde voie d'écoulement (10),
**caractérisé en ce que** :
- le piston de soupape (6) comporte un élément de liaison (12) qui relie une première section d'extrémité (13) du piston de soupape (6) à l'intérieur de la zone de la première sortie de soupape (4) à une seconde section d'extrémité (14) du piston de soupape (6) à l'intérieur de la zone de la seconde sortie de soupape (5),
- dans lequel un diamètre extérieur (15) de l'élément de liaison (12) est plus petit qu'un diamètre extérieur (17) de la seconde partie d'extrémité (14),
- dans lequel la seconde section d'extrémité (14) du piston de soupape (6) forme un espace de réception (23) dans lequel l'élément fonctionnel (24) est inséré,
- dans lequel il est prévu au moins une mâchoire de retenue élastique (43) qui fixe l'élément fonctionnel (24) à l'intérieur de l'espace de réception (23), et
- dans lequel ladite au moins une mâchoire de retenue (43) est maintenue dans une position qui fixe l'élément fonctionnel (24) au moyen d'une bague de retenue (42).

2. Soupape de commutation (1) selon la revendication 1, dans laquelle le piston de soupape (6) peut être commuté de la première position de commutation (7) à la seconde position de commutation (8) au moyen d'une pression de fluide qui est appliquée à l'entrée de soupape (3) dès que la seconde voie d'écoulement (10) est libérée.

3. Soupape de commutation (1) selon l'une quelconque des revendications précédentes, dans laquelle la première section d'extrémité (13) forme un joint de soupape (22) avec le carter de soupape (2) à l'intérieur de la zone de la première sortie de soupape (4).

4. Soupape de commutation (1) selon l'une quelconque des revendications précédentes, dans laquelle le diamètre extérieur (15), de préférence maximal ou moyen, de l'élément de liaison (12) est inférieur au diamètre extérieur (16) de la première section d'extrémité (13).

5. Soupape de commutation (1) selon l'une quelconque des revendications précédentes, dans laquelle l'élément de liaison (12) se présente sous la forme d'une tige et/ou d'une tige de piston, de préférence en matériau plein.

6. Soupape de commutation (1) selon l'une quelconque des revendications précédentes, dans laquelle le piston de soupape (6) forme une première surface d'impact (27) au niveau d'une première zone de transition (25) de l'élément de liaison (12) à la première section d'extrémité (13).

7. Soupape de commutation (1) selon l'une quelconque des revendications précédentes, dans laquelle le piston de soupape (6) forme une seconde surface d'impact (28) au niveau d'une seconde zone de transition (26) de l'élément de liaison (12) à la seconde section d'extrémité (14), et dans laquelle au moins une ouverture d'écoulement (37), à travers laquelle la seconde voie d'écoulement (10) s'étend à l'intérieur de l'espace de réception (23), est formée dans la seconde surface d'impact (28).

8. Soupape de commutation (1) selon la revendication 7, dans laquelle l'élément fonctionnel (24) est disposé dans la direction de la seconde voie d'écoulement (10) derrière ladite au moins une ouverture d'écoulement (37).

9. Soupape de commutation (1) selon l'une quelconque des revendications précédentes, dans laquelle une chambre de fluide (18) est formée entre le carter de soupape (2) et l'élément de liaison (12), ladite chambre de fluide entourant l'élément de liaison (12) à la manière d'un anneau.

10. Soupape de commutation (1) selon la revendication 9, dans laquelle la chambre de fluide (18), à partir de l'entrée de soupape (3), se rétrécit en direction de la première section d'extrémité (13) et s'élargit en direction de la seconde partie d'extrémité (14), de telle manière qu'une seconde surface transversale d'écoulement (21) de la chambre de fluide (18) dans la seconde zone de transition (26) soit plus grande qu'une première surface transversale d'écoulement (20) de la chambre de fluide (18) à l'intérieur de la zone de la première section d'extrémité (13).

11. Soupape de commutation (1) selon l'une quelconque des revendications précédentes, dans laquelle une première surface d'engagement (39) du piston de soupape (6), qui génère des forces de surface qui tirent le piston de soupape (6) en direction de la première position de commutation (7) lorsque la pression du fluide s'applique à l'entrée de soupape (3), a une configuration plus petite qu'une seconde surface d'engagement (40) du piston de soupape (6), qui, lorsque la pression du fluide s'applique à l'entrée de soupape (3), génère des forces de surface qui tirent le piston de soupape (6) en direction de la seconde position de commutation (8).

12. Soupape de commutation (1) selon l'une quelconque des revendications précédentes, dans laquelle un espace mort (31) est formé entre le carter de soupape (2) et la seconde section d'extrémité (14) du piston de soupape (6), espace mort dans lequel un fluide qui afflue par l'entrée de soupape (3) peut ainsi affluer mais ne peut cependant pas s'écouler à travers celui-ci.

13. Soupape de commutation (1) selon la revendication 12 prise en combinaison avec la revendication 6 et/ou la revendication 7, dans laquelle le piston de soupape (6) génère une autre surface de contact (44) pour le fluide au moyen d'un joint qui entoure le piston de soupape (6) et le piston de soupape est guidé au moyen du joint à l'intérieur du carter de soupape (2).

14. Soupape de commutation (1) selon l'une quelconque des revendications précédentes, dans laquelle l'entrée de soupape (3) est formée dans une surface latérale extérieure du carter (3) au niveau de l'élément de liaison (12).

15. Module sanitaire (32) comprenant une première sortie de fluide (33), une seconde sortie de fluide (34) et une soupape d'inversion (1) selon l'une quelconque des revendications précédentes, dans lequel le carter de soupape (2) est inséré dans un boîtier (47) du module (32) de telle manière que la première voie d'écoulement (9) s'étende à travers la première sortie de fluide (33), tandis que la seconde voie d'écoulement (10) s'étend à travers la seconde sortie de fluide (34) du module.

16. Module sanitaire (32) selon la revendication 15, dans lequel la soupape de commutation (1) peut être commutée dans sa position d'utilisation par une variation de pression dans la seconde sortie de fluide (34).
